# EUROPÄISCHE PATENTSCHRIFT

(11) **EP 0 887 870 B1**
(45) Veröffentlichungstag und Bekanntmachung des Hinweises auf die Patenterteilung: **28.02.2007**
(21) Anmeldenummer: 98109327.1
(22) Anmeldetag: 22.05.1998
(51) Int. Cl.: H01M 2/04, H01M 2/20

(54) **Verfahren zur Herstellung eines wenigstens bereichsweise elektrisch leitenden Akkumulatorendeckels**
Method of manufacturing of a cover for accumulators rendered conductive in certain areas
Méthode de fabrication d'un couvercle d'accumulateur rendu conducteur dans des zones prédéterminées

(30) Priorität: 24.06.1997 DE 19726742
(43) Veröffentlichungstag der Anmeldung: 30.12.1998
(73) Patentinhaber: VB Autobatterie GmbH & Co. KGaA, 30419 Hannover (DE)
(72) Erfinder: Pospiech, Gerhard, Dr., D-59929 Brilon (DE); Nann, Eberhard, Dr., D-59494 Soest-Deiringsen (DE); Hester, Hermann, D-59929 Brilon (DE); Hampe, Werner, D-34431 Marsberg-Helminghausen (DE); Kohaupt, Franz-Josef, D-34431 Marsberg (DE)
(74) Vertreter: Gramm, Werner

(56) Entgegenhaltungen:
- EP-A- 0 841 146
- DE-A- 4 432 966
- DE-C- 19 636 854
- PATENT ABSTRACTS OF JAPAN vol. 008, no. 115 (E-247), 29. Mai 1984 (1984-05-29) & JP 59 029355 A (NIHON DENCHI KK), 16. Februar 1984 (1984-02-16)
- PATENT ABSTRACTS OF JAPAN vol. 017, no. 375 (E-1397), 14. Juli 1993 (1993-07-14) & JP 05 062657 A (MATSUSHITA ELECTRIC IND CO LTD), 12. März 1993 (1993-03-12)

## Beschreibung

Die vorliegende Erfindung betrifft ein Verfahren zur Herstellung eines wenigstens bereichsweise elektrisch leitenden Akkumulatorendeckels. Darüber hinaus wird mit der Erfindung ein neuartiger Akkumulatorendeckel mit elektrisch leitenden Eigenschaften angegeben. Aus der Erfindung ergibt sich auch ein neuartiger Akkumulator mit einem elektrisch leitenden Akkumulatorendeckel, wobei im Bereich des Zelleninneren der Deckel nichtleitend ausgeführt ist.

Bei Akkumulatoren, üblicherweise Bleiakkumulatoren, kann es infolge der bei der Ladung entstehenden Sauerstoff- und Wasserstoffgase, die sich im Zellenraum unterhalb des Deckels sammeln, zu Knallgaszündungen durch elektrostatische Felder kommen. Elektrostatische Felder können einerseits direkt auf der Oberfläche eines z. B. aus Polypropylen bestehenden Kunststoffdeckels durch Reibung mit einem Lappen erzeugt werden, andererseits durch Potentialfelder und Funkenbildung auf den Deckel übertragen werden. Es besteht ein Bedarf und inzwischen auch ein Erfordernis zur Vermeidung derartiger Knallgaszündungen durch die Möglichkeit der Ableitung und durch die Einrichtung eines definierten Widerstandes. Wählt man nun ein Material für den Deckel, das einem Widerstand von ≤ 10⁴ Ω x cm entspricht, so werden keine elektrostatischen Felder aufgebaut. Jedoch fließt dann zwischen den beiden Polen einer Batterie/Zelle nach dem Ohm'schen Gesetz ein Strom im Milliamperebereich bei z. B. 12 Volt, der eine ständige Entladung der Batterie darstellen würde. Durch diesen Entladestrom bedingt (Selbstenladung der Batterie) muß ein unterster Widerstand von 10⁵ Ω x cm eingehalten werden. Man könnte gegebenenfalls einen der Akkumulatorenpole gegenüber dem Kunststoff isolieren, jedoch erzeugt dies zusätzliche Kosten. Darüber hinaus kann dies die Vermeidung von Knallgaszündungen nicht garantieren.

In der DE 196 36 854 C2 ist ein Akkumulator mit Stopfen und Deckel aus Kunststoff beschrieben. Der spezifische Oberflächenwiderstand der Kunststoffe im Gasableitungsbereich ist durch Zusätze herabgesetzt.

In der EP 0 841 146 A1 ist ein Verfahren zur Erzeugung leitfähiger Bereich aus isolierenden Kunststoffen durch Zuführung von thermischer Energie beschrieben. Nach der Herstellung von Akkumulatorendeckel können auf diese Weise ableitfähige Strukturen durch die thermische Spezialbehandlung erzeugt werden.

In der DE 44 32 966 A1 ist ein Verfahren zur Herstellung eines Bauteils aus thermoplastischem Kunststoff beschrieben, bei dem durch Oberflächenaktivierung und Metallisierung elektrische Leitungen zum Anschluss von elektrischen Bauteilen geschaffen werden.

Aus der JP 59 029355 ist ein einfacher Bleiakkumulator bekannt, bei dem auf der Unterseite des Deckels eine elektrische leitfähige Platte zum Ableiten elektrischer Ladung über eine Sammelelektrode zu einem Masseanschluss vorgesehen ist.

Ausgehend von diesem Stand der Technik liegt der vorliegenden Erfindung die Aufgabe zugrunde, ein Verfahren zur Herstellung eines Oberflächen in unterschiedlichen Ebenen aufweisenden Akkumulatorendeckels anzugeben, welches auf wirtschaftliche und einfache Weise durchführbar ist und die Herstellung eines Akkumulatorendeckels mit elektrisch leitenden Eigenschaften vorzugsweise unter Kombination an sich nicht leitender Kunststoffe mit elektrisch leitenden Elementen ermöglicht ist.

Zur technischen Lösung dieser Aufgabe wird mit der Erfindung ein Verfahren zur Herstellung eines Akkumulatorendeckels mit den Merkmalen des Anspruchs 1 vorgeschlagen.

Als Erdungsanschluss wird einer der Pole des Akkumulators verwendet, so dass die elektrisch leitenden Elemente untereinander und schließlich mit dem Pol verbunden werden müssen. Beim Leitlackaufbringen kann beispielsweise der Pol teilweise mitlackiert werden. Es genügt, wenn zwischen elektrisch leitenden Elementen und der Polhülse Kontakt hergestellt wird. Auch kann der Pol mit einem zusätzlichen Polkranz zur Kontaktierung versehen werden.

Der Akkumulatorendeckel weist Oberflächen in unterschiedlichen Ebenen auf, was häufig der Fall ist, wenn der Akkumulatorendeckel in an sich bekannter Weise aus einem Oberdeckel und einem Unterdeckel hergestellt wird, zwischen denen Säureabscheidungsräume ausgebildet sind. Wenn jedoch die Polebenen nicht mit einem Oberdeckel abgedeckt sind, werden die elektrisch leitenden Bahnen oder Oberflächen entweder über die Kanten gezogen oder in den unterschiedlich hohen Ebenen jeweils für sich ausgebildet, so dass in den Randbereichen Überlappungen stattfinden. In diesen überlappenden Randbereichen können dann einfache Vertikalkontaktierungen erfolgen, beispielsweise durch in entsprechende Bohrungen eingebrachte Federn, wobei die Bohrungen dann mit Kappen dicht verschlossen werden, durch Anbringen von Stiften und dergleichen.

Das erfindungsgemäße Verfahren ist einfach und wirtschaftlich anwendbar. Es lässt sich auch integrieren in bereits realisierte Fertigungsverfahren für Akkumulatorendeckel. Auf einfache Weise wird ein herkömmlicher, aus einem an sich nicht leitenden Kunststoff hergestellter Akkumulatorendeckel mit elektrisch leitenden Elementen versehen.

Die elektrisch leitenden Elemente können eine vollständige zusammenhängende Schicht bilden, beispielsweise unter Verwendung einer Folie, eines aufgebrachten Leitlackes oder dergleichen, können nur Bereiche der Oberflächen abdecken oder gemäß einem besonders vorteilhaften Vorschlag der Erfindung gitterförmig bzw. netzartig die Oberfläche des Akkumulatorendeckels überspannen.

Neben Folie, Leitlack und dergleichen können auch herkömmliche Leiterdrähte verwendet werden, vorzugsweise Flachdrähte.

Die Ausbildung der elektrisch leitenden Oberfläche kann dadurch erfolgen, dass die Akkumulatorenoberfläche beschichtet wird, indem Folie aufgebracht, Leitlack auflackiert, Heißprägeverfahren angewandt werden und dergleichen. Folie und Lack sowie elektrische Leiter können bahnenförmig auf der Oberfläche aufgebracht oder in vorgesehene Vertiefungen eingelegt werden. Leitlack kann auch in Druckverfahren, beispielsweise Siebdruck, auf die Oberfläche aufgebracht werden.

Gemäß einem besonders vorteilhaften Vorschlag der Erfindung werden die elektrisch leitenden Elemente beim Herstellen des Akkumulatorendeckels im Spritzgussverfahren eingelackt. In vorteilhafter Weise kann der Spritzgussvorgang ein Mehrkomponentenverfahren sein, wobei beispielsweise eine Komponente eines metallisierbaren Stoffes oder eines leitenden Kunststoffes, in einem zweiten Spritzgussverfahrensschritt den Akkumulatorendeckel komplementierend aufgebracht wird.

Bei allen beschriebenen Verfahrensmöglichkeiten werden die elektrisch leitenden Elemente, ein zusammenhängendes Leitungsnetz oder eine zusammenhängende Leitungsfläche bildend angeordnet und mit einem Erdungsanschluss verbunden. Es ist durchaus möglich, dass an einem Akkumulatorendeckel mehrere Einzelflächen gebildet und jeweils mit einem Erdungsanschluss verbunden werden.

Die beschriebenen Verfahren eignen sich hervorragend zur einfachen Ausbildung elektrisch leitender Akkumulatorenoberflächen. Die Oberflächenbeschichtungsverfahren sind äußerst einfach, können jedoch beschädigt werden oder keine ausreichende Verbindung zur Kunststoffoberfläche des Akkumulatorendeckels gewährleisten. Sie sind dennoch eine wirtschaftlich einfache Lösung der erfindungsgemäßen Aufgabe. Die Einlagerungsverfahren und Mehrkomponentenverfahren erfüllen die höchsten Anforderungen an Stabilität, Lebensdauer, Kratz- und Wischfestigkeit, Säurebeständigkeit, Unverlierbarkeit und dergleichen. Sie machen üblicherweise neue Herstellungsvorrichtungen erforderlich.

Gemäß einem besonders vorteilhaften Vorschlag der Erfindung kann bei Anwendung des Zweikomponentenspritzgussverfahrens anstelle eines noch zu metallisierenden Kunststoffes direkt auch Propylen mit einem Russanteil größer 13% eingesetzt werden. Hier lassen sich mehrfache Leiterbahnebenen erzielen, beispielsweise über drei Ebenen. Der Oberdeckel und der Unterdeckel sind direkt miteinander verschweißbar, wobei die im Oberdeckel und im Unterdeckel durch Russanteileinlagerung gebildeten Leiterbahnen direkt übereinander liegen und miteinander kontaktierbar sind.

Die Erfindung bringt einen neuen Typ von Akkumulatorendeckel hervor, der erfindungsgemäß wenigstens bereichsweise elektrisch leitend ausgebildet und mit einer Ableitungseinheit versehen ist. Durch diesen neuartigen Akkumulatorendeckel werden eingangs genannte Explosionsgefahren vollständig vermieden.

Ein mit einem erfindungsgemäßen Akkumulatorendeckel versehener Akkumulator ist ebenfalls neu und vielseitig einsetzbar. Insbesondere erweist er sich erfindungsgemäß im Masseneinsatz, beispielsweise in Kraftfahrzeugen, als sicherheitserhöhend.

Weitere Vorteile und Merkmale der Erfindung ergeben sich aus der folgenden Beschreibung anhand der Figuren. Dabei zeigen:
- Figur 1: eine schematische Darstellung eines Teilbereichs eines Akkumulatorendeckels mit ausgebildeten elektrischen Leitern;
- Figur 2a bis 2c: ein Ausführungsbeispiel für Herstellungsschritte für Mehrkomponentenherstellung und
- Figur 3a bis 3c: ein alternatives Ausführungsbeispiel gemäß Figur 2.

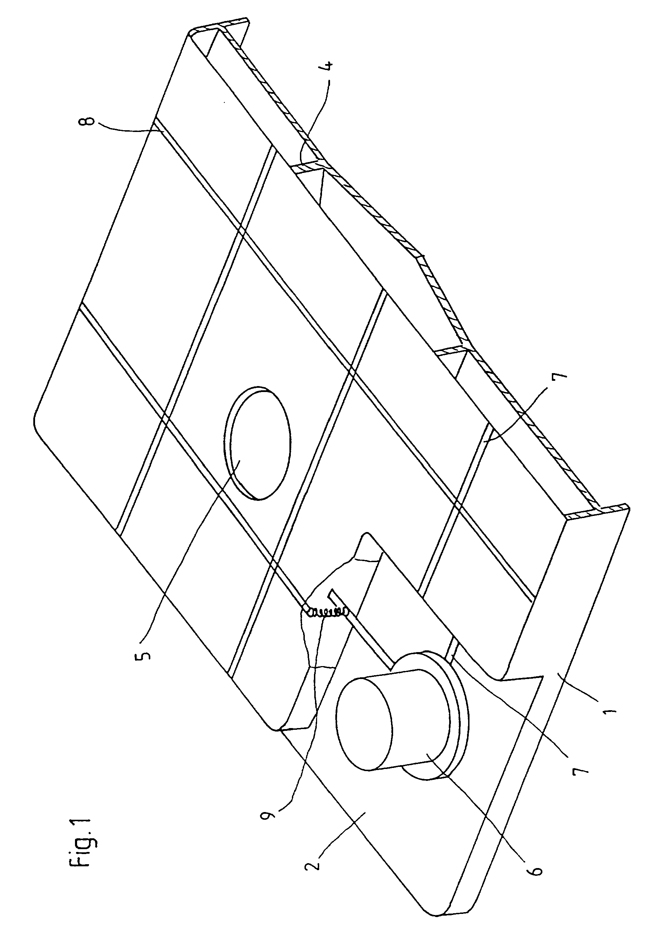

In Figur 1 ist schematisch ein Deckel 1 eines Bleiakkumulators gezeigt, der in an sich bekannter Weise aus einem sogenannten Unterdeckel 2 besteht, auf dem nicht gezeigte Stege zellenbezogene Kammern bilden. Weitere Stege 4 dienen zur Ausbildung eines Rückhaltelabyrinths für Batteriesäure. Schließlich wird durch eine weitere Steganordnung - ebenfalls nicht gezeigt - eine Zugangsöffnung 5 zu den jeweiligen Zellen eingefaßt. Die Ausbildung des Akkumulatorengehäuses beziehungsweise des Deckels selbst ist für die vorliegende Erfindung von untergeordneter Bedeutung.

In an sich bekannter Weise durchragt ein Batteriepol 6 den Deckel. An einer anderen Stelle durchragt ein nicht gezeigter weiterer Batteriepol den Deckel. Durch die Ausbildung leitfähiger Bereiche, die darüber hinaus mit einem der Pole verbunden sind, vorzugsweise dem negativen Pol, wird eine Leitung, Kontrolle und Ableitung von Spannungen ermöglicht. Durch die Leiter 7 und 8 wird ein Gitter gebildet, wobei die Leiter beispielsweise durch aufgedruckten Leitlack gebildet sind. Im Übergangsbereich 9 vom Oberdeckel auf den Unterdeckelbereich, die in unterschiedlich hohen Ebenen liegen, ist eine Bohrung angeordnet, in welcher ein elektrisch verbindendes Element, beispielsweise eine nicht gezeigte Feder, ein Kontaktstift oder dergleichen einsetzbar sind. Die im Unterdeckel liegende Bahn 8 ist so lang, daß sie sich mit der im Oberdeckel liegenden Bahn 8 überlappt. Wird also in die Bohrung im Bereich 9 ein Kontaktelement eingesetzt, werden die Bahnen miteinander verbunden. Die Bohrung läßt sich dann durch eine Kunststoffkappe - nicht gezeigt - abdecken.

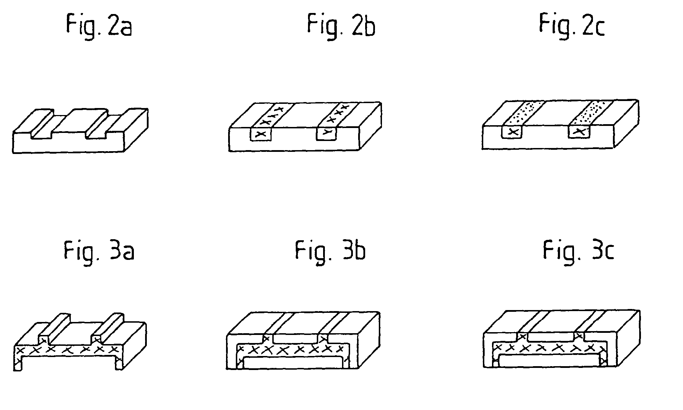

Figuren 2 und 3 zeigen Ausführungsbeispiele für die Herstellung von erfindungsgemäßen Akkumulatorendeckeln im Mehrkomponenten-Spritzgußverfahren.

Gemäß Figur 2a wird in einem ersten Spritzgußvorgang, einem sogenannten ersten Schuß, ein Vorspritzling aus Kunststoff hergestellt. Gemäß diesem Ausführungsbeispiel ist es ein nicht metallisierbarer Kunststoff, der Einlagerungsnuten aufweist. Gemäß Figur 2b wird dann in einem zweiten Schuß der Fertigspritzling hergestellt, welcher eine zweite Komponente eines metallisierbaren Materials oder einem leitfähigen Kunststoff, z. B. PP mit einem Rußanteil größer 13 %, aufweist. Im Falle eines metallisierbaren Materials erfolgt dann in einem dritten Schritt die Ummetallisierung.

Bei dem alternativen Ausführungsbeispiel gemäß Figur 3 ist in Figur 3a der Vorspritzling aus einem metallisierbaren Material hergestellt. Im zweiten Schuß wird der Fertigspritzling durch Einlagern des ersten Spritzlings in nicht metallisierbaren Kunststoff ausgebildet. Auch im dritten Schritt erfolgt gemäß Figur 3a die Metallisierung., sofern nicht im ersten Schritt gleich leitfähiger Kunststoff benutzt wird.

Als Materialkombinationen können beispielsweise angegeben werden als metallisierbare Materialien ABS, PEI, LCP, PES, PA66/6, PA6, PA66 und entsprechende Materialien. Als nicht metallisierbare Materialien kommen in unterschiedlichen Kombinationen mit den genannten metallisierbaren Materialien in Betracht PC, PE, PPS, PSF, PA11, PA12, POM und dergleichen.

Die Metallisierung kann stromlos oder galvanisch unter Verwendung von Kupfer, Nickel, Gold, Zinn und dergleichen erfolgen.

Mit den genannten Verfahren lassen sich auf einfache Weise elektrisch leitende Akkumulatorendeckel herstellen.

### Bezugszeichenliste:

- 1: Deckel
- 2: Unterdeckel
- 4: Steg
- 5: Zellenöffnung
- 6: Pol
- 7: Leiter
- 8: Leiter
- 9: Höhenübergang

## Patentansprüche

1. Verfahren zur Herstellung eines Akkumulatorendeckels, wobei der Akkumulatorendeckel Oberflächen in unterschiedlich hohen Ebenen aufweist und der Deckel wenigstens bereichsweise seine Oberfläche überspannend mit elektrisch leitenden Elementen versehen wird, welche untereinander verbunden und an wenigstens einen Erdungsanschluss zur Ableitung elektrischer Ladung angeschlossen werden, **dadurch gekennzeichnet, dass** die elektrisch leitenden Elemente mit einem Akkumulatorenpol als Erdungsanschluss verbunden werden und die leitenden Elemente der unterschiedlichen Ebenen zumindest im Randbereich einander überlappend ausgebildet und vertikal miteinander verbunden werden.

2. Verfahren nach Anspruch 1, **dadurch gekennzeichnet, dass** der Akkumulatorendeckel an seiner Oberfläche mit einer elektrisch leitenden Schicht beschichtet wird.

3. Verfahren nach Anspruch 1, **dadurch gekennzeichnet, dass** der Akkumulatorendeckel an seiner Oberfläche mit Bahnen elektrisch leitenden Materials beschichtet wird.

4. Verfahren nach einem der vorhergehenden Ansprüche, **dadurch gekennzeichnet, dass** an der Oberfläche des Akkumulatorendeckels Vertiefungen ausgebildet werden, in welche elektrisch leitendes Material eingelegt wird.

5. Verfahren nach einem der vorhergehenden Ansprüche, **dadurch gekennzeichnet, dass** als elektrisch leitendes Material Metallfolie verwendet wird.

6. Verfahren nach einem der vorhergehenden Ansprüche, **dadurch gekennzeichnet, dass** als elektrisch leitendes Material Leiterdraht verwendet wird.

7. Verfahren nach einem der vorhergehenden Ansprüche, **dadurch gekennzeichnet, dass** das elektrisch leitende Material ein Gitter bildend an der Oberfläche des Akkumulatorendeckels angeordnet wird.

8. Verfahren nach einem der vorhergehenden Ansprüche, **dadurch gekennzeichnet, dass** als elektrisch leitendes Material Leitlack verwendet wird.

9. Verfahren nach einem der vorhergehenden Ansprüche, **dadurch gekennzeichnet, dass** der Akkumulatorendeckel mit elektrisch leitendem Material bedruckt wird.

10. Verfahren nach einem der vorhergehenden Ansprüche, **dadurch gekennzeichnet, dass** elektrisch leitendes Material beim Herstellen des Akkumulatorendeckels im Spritzgussverfahren eingelagert wird.

11. Verfahren nach einem der vorhergehenden Ansprüche, **dadurch gekennzeichnet, dass** der Akkumulatorendeckel in einem Mehrkomponenten-Spritzgussverfahren hergestellt wird, wobei eine Komponente elektrisch leitend ausgebildet werden kann.

12. Verfahren nach Anspruch 11, **dadurch gekennzeichnet, dass** eine der Komponenten ein metallisierbarer Kunststoff ist.

13. Verfahren nach einem der vorhergehenden Ansprüche, **dadurch gekennzeichnet, dass** die vertikale Verbindung unter Verwendung von Bohrungen und in diese eingesetzte leitende Elemente gebildet wird.

14. Verfahren nach Anspruch 13, **dadurch gekennzeichnet, dass** das vertikal leitende Element ein Federelement ist.

15. Verfahren nach Anspruch 13, **dadurch gekennzeichnet, dass** das vertikal leitende Element ein Stift ist.

16. Akkumulatorendeckel, hergestellt nach dem Verfahren nach wenigstens einem der Ansprüche 1 bis 15, **dadurch gekennzeichnet, dass** er wenigstens bereichsweise seine Oberfläche überspannend mit elektrisch leitenden Elementen versehen ist, welche untereinander verbunden und an wenigstens einen Anschluss zur Ableitung elektrischer Ladung angeschlossen sind.

17. Akkumulator, **gekennzeichnet durch** einen Akkumulatorendeckel nach Anspruch 16.

## Claims

1. Method for production of a rechargeable-battery cover, with the rechargeable-battery cover having surfaces at different height levels and with the cover being provided at least in places with electrically conductive elements which cover its surface, are connected to one another and are connected to at least one earthing connection in order to dissipate electrical charge, **characterized in that** the electrically conductive elements are connected to one rechargeable-battery pole as an earthing connection, and the conductive elements in the different levels overlap one another, at least in the edge area, and are vertically connected to one another.

2. Method according to Claim 1, **characterized in that** the rechargeable-battery cover is coated with an electrically conductive layer on its surface.

3. Method according to Claim 1, **characterized in that** the rechargeable-battery cover is coated with tracks of electrically conductive material on its surface.

4. Method according to one of the preceding claims, **characterized in that** depressions into which electrically conductive material is inserted are formed on the surface of the rechargeable-battery cover.

5. Method according to one of the preceding claims, **characterized in that** metal foil is used as the electrically conductive material.

6. Method according to one of the preceding claims, **characterized in that** conductor wire is used as the electrically conductive material.

7. Method according to one of the preceding claims, **characterized in that** the electrically conductive material is arranged, forming a grid, on the surface of the rechargeable-battery cover.

8. Method according to one of the preceding claims, **characterized in that** conductive lacquer is used as the electrically conductive material.

9. Method according to one of the preceding claims, **characterized in that** electrically conductive material is printed on the rechargeable-battery cover.

10. Method according to one of the preceding claims, **characterized in that** electrically conductive material is introduced in the injection-moulding process during the production of the rechargeable-battery cover.

11. Method according to one of the preceding claims, **characterized in that** the rechargeable-battery cover is produced using a multiple-component injection-moulding process, in which case one component may be electrically conductive.

12. Method according to Claim 11, **characterized in that** one of the components is a plastic which can be metallized.

13. Method according to one of the preceding claims, **characterized in that** the vertical connection is formed using holes and conductive elements inserted in them.

14. Method according to Claim 13, **characterized in that** the vertically conductive element is a spring element.

15. Method according to Claim 13, **characterized in that** the vertically conductive element is a pin.

16. Rechargeable-battery cover, produced using the method according to at least one of Claims 1 to 15, **characterized in that** the rechargeable-battery cover is provided at least in places with electrically conductive elements which cover its surface, are connected to one another and are connected to at least one connection in order to dissipate electrical charge.

17. Rechargeable battery, **characterized by** a rechargeable-battery cover according to Claim 16.

## Revendications

1. Procédé de fabrication d'un couvercle d'accumulateur présentant des surfaces dans des plans de hauteur différente, et pourvu au moins partiellement d'éléments électroconducteurs recouvrant sa surface et reliés entre eux et connectés à au moins un raccordement de mise à la terre en vue de la dérivation de charge électrique,
**caractérisé en ce qu'**
on relie les éléments électroconducteurs à un pôle d'accumulateur en tant que raccordement de mise à la terre, et les éléments conducteurs des différents plans se chevauchent, au moins dans la zone de bord, et reliés entre eux verticalement.

2. Procédé selon la revendication 1,
**caractérisé en ce que**
on recouvre la surface du couvercle d'accumulateur, d'une couche électroconductrice.

3. Procédé selon la revendication 1,
**caractérisé en ce que**
on recouvre la surface du couvercle d'accumulateur, de bandes de matériau électroconducteur.

4. Procédé selon l'une quelconque des revendications précédentes,
**caractérisé en ce que**
à la surface du couvercle d'accumulateur on forme des cavités logeant un matériau électroconducteur.

5. Procédé selon l'une quelconque des revendications précédentes,
**caractérisé en ce que**
comme matériau électroconducteur on utilise une feuille métallique.

6. Procédé selon l'une quelconque des revendications précédentes,
**caractérisé en ce que**
comme matériau électriquement conducteur on utilise un fil conducteur.

7. Procédé selon l'une quelconque des revendications précédentes,
**caractérisé en ce que**
le matériau électroconducteur forme une grille à la surface du couvercle d'accumulateur.

8. Procédé selon l'une quelconque des revendications précédentes,
**caractérisé en ce que**
comme matériau électroconducteur on utilise un vernis conducteur.

9. Procédé selon l'une quelconque des revendications précédentes,
**caractérisé en ce que**
le couvercle d'accumulateur est imprimé avec du matériau électroconducteur.

10. Procédé selon l'une quelconque des revendications précédentes,
**caractérisé en ce que**
lors de la fabrication du couvercle d'accumulateur, on introduit le matériau électroconducteur selon un procédé de moulage par injection.

11. Procédé selon l'une quelconque des revendications précédentes,
**caractérisé en ce que**
le couvercle d'accumulateur est fabriqué selon un procédé de moulage par injection à plusieurs constituants, l'un des constituants pouvant être électroconducteur.

12. Procédé selon la revendication 11,
**caractérisé en ce que**
l'un des constituants est une matière plastique métallisable.

13. Procédé selon l'une quelconque des revendications précédentes,
**caractérisé en ce que**
la liaison verticale est formée en utilisant des perçages et des éléments conducteurs insérés dans ceux-ci.

14. Procédé selon la revendication 13,
**caractérisé en ce que**
l'élément conducteur vertical est un élément à ressort.

15. Procédé selon l'une quelconque des revendications précédentes,
**caractérisé en ce que**
l'élément conducteur vertical est une goupille.

16. Couvercle d'accumulateur fabriqué selon le procédé selon au moins l'une quelconque des revendications 1 à 15,
**caractérisé en ce que**
des éléments électroconducteurs recouvrant au moins partiellement sa surface, sont reliés entre eux et connectés à au moins un raccordement en vue de la dérivation de charge électrique.

17. Accumulateur,
**caractérisé par**
un couvercle d'accumulateur selon la revendication 16.
